# EUROPÄISCHE PATENTSCHRIFT

(11) **EP 2 777 912 B1**
(45) Veröffentlichungstag und Bekanntmachung des Hinweises auf die Patenterteilung: **13.07.2016**
(21) Anmeldenummer: 14158064.7
(22) Anmeldetag: 06.03.2014
(51) Int. Cl.: B29C 49/46, B29C 49/28, B29C 49/06, B29C 49/36, F16H 53/00

(54) **Vorrichtung zum Behandeln von Behältnissen mit Kunststoffführungsrollen aus Polyamidimid**
Device for handling containers with plastic guide rollers made of polyamide-imide
Dispositif de traitement de récipients comprenant des galets de guidage en matière synthétique en polyamidimide

(30) Priorität: 11.03.2013 DE 202013101048 U
(43) Veröffentlichungstag der Anmeldung: 17.09.2014
(73) Patentinhaber: Krones AG, 93073 Neutraubling (DE)
(72) Erfinder: Höllriegl, Thomas, 93073 Neutraubling (DE); Geltinger, Florian, 93073 Neutraubling (DE); Spitzer, Thomas, 93073 Neutraubling (DE)
(74) Vertreter: Bittner, Bernhard

(56) Entgegenhaltungen:
- EP-A1- 2 388 129
- EP-A2- 2 540 473
- WO-A1-01/38204

## Beschreibung

Die vorliegende Erfindung betrifft eine Vorrichtung zum Behandeln von Behältnissen und insbesondere eine Vorrichtung zum Behandeln von Kunststoffbehältnissen. Derartige Vorrichtungen sind aus dem Stand der Technik seit langem bekannt; beispielsweise in Form von Öfen zum Erwärmen von Kunststoffvorformlingen, von Umformungseinrichtungen zum Umformen von Kunststoffvorformlingen zu Kunststoffbehältnissen, von Fülleinrichtungen, von Etikettiermaschinen und dergleichen. , siehe z.B. EP2540474 und EP2388129 Diese Vorrichtungen behandeln dabei Behältnisse in einer vorgegebenen Weise, beispielsweise, indem sie Kunststoffvorformlinge zu Kunststoffbehältnissen umformen oder dergleichen. Dabei werden oftmals eine Vielzahl von Elementen dieser Behandlungseinheiten während des Transports der Behältnisse bewegt, beispielsweise Formschalen oder Formschalenträger einer Blasmaschine aufeinander zugestellt, um so einen Hohlraum auszubilden, innerhalb dessen die Kunststoffbehältnisse erzeugt werden.

Im Stand der Technik finden dabei bei sehr vielen Maschinen sogenannte Führungskurven Anwendung, die üblicherweise stationär angeordnet sind, und denen gegenüber Kurvenrollen abrollen, wobei durch dieses Abrollen auch die entsprechende Bewegung der Behandlungseinheiten erzeugt wird. Üblicherweise werden derzeit Kurvenrollen aus Stahl eingesetzt. Bei derartigen Stahlrollen tritt das Problem auf, dass mit Fett geschmiert werden muss, und daher ein sehr schneller Verschleiß eintritt. Daneben müssen die eingesetzten Führungskurven auch gehärtet werden, um eine ausreichende Lebensdauer zu erreichen. Daneben spritzt bei Schmierungen das überschüssige Fett auch durch die sich immer schneller drehenden Kurvenrollen (auch hervorgerufen durch Leistungssteigerungen) davon. Insbesondere für aseptische Anwendungen ist dies jedoch störend.

Teilweise verschleißen auch die eingesetzten Rollen relativ schnell.

Verschleissarme Rollen sind aus WO0138204 bekannt. Der vorliegenden Erfindung liegt die Aufgabe zugrunde, eine Vorrichtung zum Behandeln von Behältnissen zur Verfügung zu stellen, bei der der Verschmutzungsgrad gegenüber aus dem Stand der Technik bekannten Maschinen herabgesetzt werden kann. Eine weitere Aufgabe besteht darin, den Verschleiß derartiger Maschinen zu reduzieren. Diese Aufgaben werden erfindungsgemäß durch die Gegenstände der unabhängigen Ansprüche erreicht. Vorteilhafte Ausführungsformen und Weiterbildungen sind Gegenstand der Unteransprüche. Eine erfindungsgemäße Vorrichtung zum Behandeln von Behältnissen weist einen bewegbaren Träger auf, an dem eine Vielzahl von Behandlungsstationen zum Behandeln der Behältnisse angeordnet ist, wobei bevorzugt jede dieser Behandlungsstationen die Behältnisse in einer vorgegebenen Weise behandelt. Weiterhin weist jede dieser Behandlungsstationen wenigstens ein bezüglich des Träger bewegbares Element auf und dieses bewegbare Element ist wenigstens zeitweise mittels einer Kopplungseinrichtung mit einer stationär angeordneten Führungskurve gekoppelt, derart, dass durch eine Relativbewegung zwischen der Behandlungsstation und der Führungskurve eine Bewegung des bewegbaren Elements hervorgerufen wird.

Erfindungsgemäß weist die Kopplungseinrichtung wenigstens eine Führungsrolle auf, die wenigstens zeitweise gegenüber der Führungskurve abrollt, wobei diese Führungsrolle und/oder die Führungskurve wenigstens teilweise einen imidisierten Kunststoff aufweist.

Es wird daher vorgeschlagen, die bisher eingesetzten Stahlrollen und/oder das Material der Führungskurve aus einem imidisierten Kunststoff herzustellen. Die Anmelderin konnte herausfinden, dass der Einsatz eines derartigen Kunststoffes große Vorteile mit sich bringt. So ist bei Verwendung derartiger Polyamidimidrollen keine Härtung der Führungskurven, wie beispielsweise der Hauptkurven, Zentralkurven, von Ver- und Entriegelungskurven, von Bodenansteuerungskurvensegmenten, Heizdornkurven und dergleichen mehr nötig. Daneben kann auch die im Stand der Technik übliche Schmierung entfallen. Damit ist der Verschleiß gegenüber anderen denkbaren Kunststoffen geringer und damit auch die Lebensdauer wesentlich länger. Insbesondere für aseptische Anwendungsbereiche eignet sich der hier beschriebene Kunststoff.

Daneben könnte als Material für die Führungskurve und/ oder Führungsrolle auch PEEK (Polyetherketon) verwendet werden. Vorzugsweise enthält dieses PEEK Material Verstärkungsfasern. Ein derartiges Material eignet sich insbesondere bei geringer Laufleistung.

Dabei ist vorteilhaft wenigstens eines der beiden sich kontaktierenden Elemente, d.h. die Führungsrolle und/oder die Führungskurve aus dem erwähnten imidisierten Kunststoff hergestellt. Im Folgenden wird stellvertretend für derartige imidisierte Kunststoffe von Polyamidimid gesprochen, es wird jedoch darauf hingeweisen, dass der imidisierte Kunststoff aus einer Gruppe von Kunststoffen ausgewählt sein kein, welche PI (Polyimid), PBI (Polybenzinimidazol), und dergleichen und/oder Kombinationen aus diesen Kunststoffen enthält.

Es wird daher vorgeschlagen, dass wenigstens einer der beiden Körper, welche zur Herbeifügung der Bewegung in Kontakt miteinander treten, ein imidisierter (allgemein bevorzugt verstärkter) Kunststoff ist.

Bei einer bevorzugten Ausführungsform weist die Vorrichtung einen Reinraum auf, innerhalb dessen die Behältnisse während ihrer Behandlung durch die Behandlungsstationen transportiert werden. Aus dem Stand der Technik ist es bekannt, dass die Herstellung bestimmter Getränke, beispielsweise Eistees, eine hohe Reinheit erfordert. Zu diesem Zwecke sind daher üblicherweise Reinräume vorgesehen, innerhalb derer die Kunststoffbehältnisse behandelt werden, beispielsweise Kunststoffvorformlinge zu Kunststoffbehältnissen umgeformt werden.

Vorteilhaft umgibt dabei der besagte Reinraum einen Transportpfad der Behältnisse kanalartig. Auf diese Weise kann das Volumen des Reinraums (welches steril gehalten werden muss) sehr klein gehalten werden. So ist es beispielsweise möglich, dass bereits der erwähnte Träger, an dem die Behandlungstationen angeordnet sind, selbst eine Wandung dieses Reinraums ausbildet.

Bei einer weiteren vorteilhaften Ausführungsform weist der Reinraum wenigstens eine erste diesen Reinraum begrenzende Wandung auf, an deren Bewegung eine Bewegung des Trägers gekoppelt ist, sowie eine zweite insbesondere stationäre Wandung, welche ebenfalls den Reinraum begrenzt. Dabei kann bevorzugt auch eine Dichtungseinrichtung vorgesehen sein, welche diese besagten sich bezüglich einander bewegenden Wandungen abdichtet. So kann beispielsweise ein sogenanntes Wasserschloss vorgesehen sein. Dieses Wasserschloss weist dabei einen umlaufenden, mit einer Flüssigkeit gefüllten Kanal auf, der bevorzugt stationär angeordnet ist, und in den ein Bestandteil des beweglichen Wandungselements eintaucht, sodass einerseits eine Relativbewegung möglich ist, andererseits jedoch der Reinraum gegenüber der Umgebung abgegrenzt ist.

Bei einer weiteren vorteilhaften Ausführungsform ist wenigstens eine die Führungskurve kontaktierende Oberfläche der Führungsrolle aus einem Polyamidimid hergestellt. Dabei ist es möglich, dass die Führungsrolle vollständig aus diesem Material hergestellt sein kann, bevorzugt ist jedoch die Oberfläche, die tatsächlich mit der Führungskurve in Kontakt tritt, aus dem besagten Polyamidimid hergestellt. Entsprechend wäre es auch möglich, dass die Oberfläche der Führungskurve, welche mit der Führungsrolle in Kontakt tritt, aus einem imidisierten Kunststoff und beispielsweise aus Polyamidimid besteht. In diesem Falle könnte als Führungsrolle auch eine herkömmliche Stahlrolle verwendet werden. Es wäre jedoch auch möglich, dass sowohl die Führungskurve als auch die Führungsrolle aus einem imidisierten Kunststoff hergestellt sind.

Bei einer weiteren vorteilhaften Ausführungsform ist die Führungsrolle mehrteilig ausgebildet. So kann es beispielsweise möglich sein, dass die Führungsrolle mittels einer Lagereinrichtung gegenüber einem Rollenträger gelagert ist und dabei beispielsweise das Material der Lagereinrichtung und der Oberfläche der Führungsrolle verschieden sind.

Bei einer weiteren vorteilhaften Ausführungsform ist die Führungsrolle an einer Behandlungsstation bzw. an der Behandlungsstation angeordnet.

Bei einer weiteren vorteilhaften Ausführungsform ist der bewegbare Träger ein um eine vorgegebene Drehachse drehbarer Träger. Dabei ist es denkbar, dass die einzelnen Behandlungseinrichtungen an einem Außenumfang bzw. einem äußeren Bereich dieses drehbaren Trägers angeordnet sind. Falls es sich bei der Vorrichtung beispielsweise um eine Blasformmaschine handelt, sind die einzelnen Blasformstationen bevorzugt an dem Außenbereich dieses Trägers befestigt.

Bei einer weiteren vorteilhaften Ausführungsform ist die Führungsrolle als Gleitrolle ausgebildet. So ist es möglich, dass die Führungsrolle ohne ein integriertes Lager ausgebildet ist.

Bei einer weiteren vorteilhaften Ausführungsform weist die Führungsrolle einen ringförmigen Körper aus Polyamidimid auf, der an einer Lagereinrichtung angebracht ist. Dabei ist es möglich, dass dieser ringförmige Körper auf die besagte Lagereinrichtung aufgeschnappt oder aufgepresst ist. Bei einer weiteren Ausführungsform wäre es auch denkbar, dass die Führungsrolle eine Lagereinrichtung aufweist, welche mit einem Polyamidimidkörper umspritzt ist. Diese Ausführungsform ist insbesondere in der Herstellung sehr einfach. Bevorzugt kann die Führungsrolle im Wesentlichen vollständig aus einem Polyamidimidkunststoff bestehen.

Bei einer weiteren vorteilhaften Ausführungsform weist die Führungsrolle einen Außendurchmesser auf, der zwischen 20 mm und 80 mm, bevorzugt zwischen 25 mm und 70 mm und besonders bevorzugt zwischen 30 mm und 60 mm liegt. Diese Durchmesser haben sich insbesondere in Verbindung mit dem hier verwendeten Werkstoff Polyamidimid als besonders vorteilhaft herausgestellt.

Bei einer weiteren vorteilhaften Ausführungsform weist die Führungskurve an einer der Führungsrolle zugewandten Oberfläche ein nicht gehärtetes Material auf. Im Stand der Technik ist es, insbesondere bei Einsatz von Stahlrollen üblich, dass auch die Führungskurven selbst gehärtet sind. Hier wird nunmehr vorgeschlagen, die Führungskurven selbst nicht mehr zu härten, was insbesondere in Verbindung mit dem verwendeten Polyamidimidkunststoff vorteilhaft ist.

Ein weiterer Vorteil der hier verwendeten Führungsrolle ist die hohe Unempfindlichkeit gegenüber Schlägen. Dies beruht darauf, dass das verwendete Material eine hohe Zähigkeit aufweist.

Bei einer weiteren vorteilhaften Ausführungsform bewegt sich die Führungsrolle schmiermittellos gegenüber der Führungskurve. Dies bedeutet, dass hier keine Schmierstoffe zum Einsatz kommen, um die Bewegung der Führungsrolle gegenüber der Führungskurve zu schmieren. Dies ist insbesondere für aseptische Anwendungen vorteilhaft, da dann auch keine Verschmutzungen durch die besagten Schmierstoffe auftreten können. Bei einer bevorzugten Ausführungsform kann eine derartige Führungskurve beispielsweise außerhalb eines Reinraums angeordnet sein und auch die Führungsrolle kann außerhalb des Reinraums angeordnet sein und eine Kopplungseinrichtung kann sich durch eine den Reinraum begrenzende Wandung hindurch erstrecken, wobei bevorzugt auch diese Bewegung, die in den Reinraum hinein übertragen wird, abgedichtet sein kann, beispielsweise durch Verwendung von Faltenbälgen und dergleichen.

Bei einer weiteren vorteilhaften Ausführungsform weist die Kopplungseinrichtung wenigstens zwei nebeneinander angeordnete Führungsrollen auf. Durch die Verwendung mehrerer Führungsrollen ist ein ausgeglichenerer Bewegungsablauf möglich. Vorteilhaft sind diese beiden nebeneinander angeordneten Führungsrollen, die insbesondere jeweils zumindest an ihrem Außenumfang ein Polyamidimidmaterial aufweisen, voneinander beabstandet. Vorteilhaft sind genau zwei nebeneinander angeordnete Führungsrollen vorgesehen, das heißt insbesondere in Form einer Doppelrolle. Bevorzugt wird durch die erste Führung eine erste Bewegung der Behandlungsstation hervorgerufen und durch die weitere Führungsrolle eine weitere, hiervon unterschiedliche Bewegung (etwa eine Bewegung in einer entgegengesetzten Richtung).

Bei einer weiteren vorteilhaften Ausführungsform verläuft eine Drehachse der Führungsrolle parallel zu einer Drehachse des Trägers.

Es wäre jedoch auch denkbar und bevorzugt, dass eine Drehachse der Führungsrolle in einer radialen Richtung des Trägers verläuft. Dies ist insbesondere für Aufwärts- und Abwärtsbewegungen von Elementen innerhalb des Reinraums vorteilhaft, da durch eine derartige Führungsrolle Bewegungen in dieser (insbesondere vertikalen) Richtung erzeugt werden können.

Vorteilhaft ist die Vorrichtung aus einer Gruppe von Vorrichtungen ausgewählt, welche Erwärmungseinrichtungen zum Erwärmen von Kunststoffvorformlingen, Umformungseinrichtungen zum Umformen von Kunststoffvorformlingen zu Kunststoffbehältnissen, Fülleinrichtungen zum Befüllen von Behältnissen, Verschließeinrichtungen zum Verschließen von Behältnissen mit Verschlüssen und dergleichen enthält. Bei derartigen Maschinen ist der Einsatz von derartigen Führungskurven vorteilhaft und es sind teilweise auch relativ hohe Kräfte zu übertragen. Aus diesem Grunde eignen sich gerade für solche Maschinen die hier beschriebenen Rollen mit Polyamidimidmaterial besonders.

Bei einer weiteren vorteilhaften Ausführungsform weisen die Behandlungsstationen jeweils Beaufschlagungseinrichtungen auf, welche Kunststoffvorformlinge mit einem gasförmigen Medium beaufschlagen sowie bezüglich einander bewegbare Blasformteile, welche in einem Zustand einen Hohlraum ausbilden, innerhalb dessen die Kunststoffvorformlinge durch Beaufschlagung mit dem gasförmigen Medium expandierbar sind. Damit handelt es sich hier bei den Behandlungsstationen um Behandlungsstationen einer Blasformmaschine. Dabei ist es denkbar, dass diese einzelnen Anteile der Blasformmaschine, wie beispielsweise die Blasformträger, die Blasdüse und dergleichen, aber auch etwaige Verriegelungsmechanismen durch Führungskurven und die hier beschriebenen Führungsrollen gesteuert werden.

Bei einer weiteren vorteilhaften Ausführungsform weisen die Behandlungsstationen jeweils einen Reckstangenkörper auf, der in die Kunststoffvorformlinge zu deren Expansion einführbar ist. Bei dieser Ausgestaltung werden die Kunststoffvorformlinge während der Expansion auch mittels der Reckstange gedehnt. Auch die Reckstangenbewegung kann dabei durch Führungskurven erzeugt werden und dabei können insbesondere wieder die hier beschriebenen Führungsrollen Einsatz finden.

Bei einer bevorzugten Ausführungsform wird wenigstens eine der beschriebenen Bewegungen durch eine Führungskurve und eine hier beschriebene Führungsrolle initiiert. Vorteilhaft kann sich, wie oben beschrieben, die Führungskurve außerhalb eines Reinraum befinden.

Bei einer weiteren vorteilhaften Ausführungsform weist die Vorrichtung mehrere Führungskurven auf, um mehrere bewegbare Elemente der Vorrichtung zu bewegen, wobei auch mehrere Führungsrollen und insbesondere Führungsrollen der hier beschriebenen Art mit einem Polyamidimidmaterial vorgesehen sind.

Bei einer weiteren vorteilhaften Ausführungsform handelt es sich bei dem verwendeten Polyamidimidmaterial um ein faserverstärktes Material, das heißt in die Führungsrolle sind auch Verstärkungsfasern eingebracht.

Bei einer weiteren vorteilhaften Ausführungsform ist wenigstens eine Führungsrolle und/oder wenigstens eine Führungskurve innerhalb des oben erwähnten Reinraums angeordnet.

Weitere Vorteile und Ausführungsformen ergeben sich aus den beigefügten Zeichnungen. Darin zeigen:
- Fig. 1: eine schematische Darstellung zur Veranschaulichung einer erfindungsgemäßen Vorrichtung;
- Fig. 2: eine Darstellung einer Vorrichtung zum Umformen von Kunststoffvorformlingen zu Kunststoffbehältnissen mit einer erfindungsgemäßen Kurvenrolle;
- Fig. 3: eine weitere Darstellung einer Vorrichtung zum Umformen von Kunststoffvorformlingen zu Kunststoffbehältnissen;
- Fig. 4: eine weitere Darstellung einer erfindungsgemäßen Vorrichtung;
- Fig. 5: eine weitere Ausführungsform einer erfindungsgemäßen Vorrichtung; und
- Fig. 6a-g: Darstellungen einer Kurvenrolle.

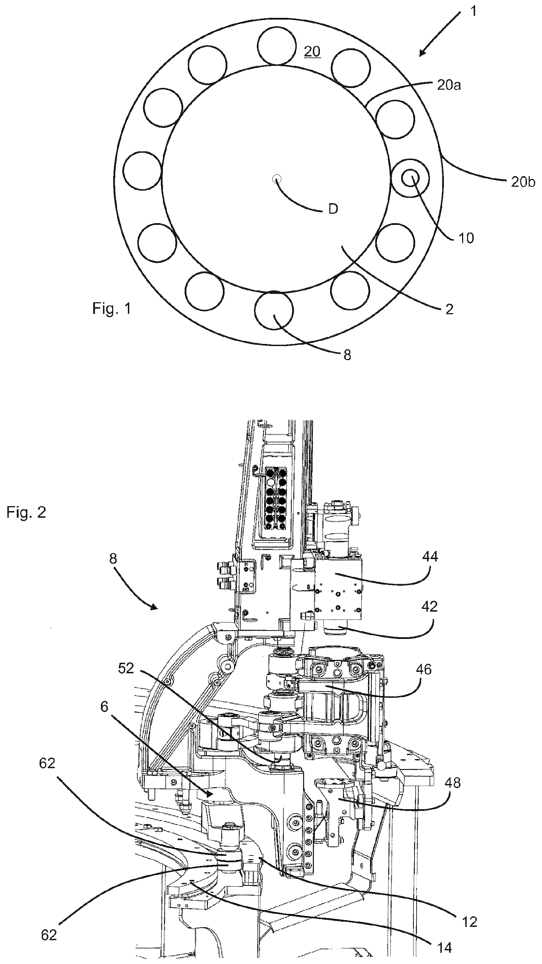

Figur 1 veranschaulicht eine erfindungsgemäße Vorrichtung 1 zum Behandeln von Kunststoffbehältnissen 10. Dabei weist die Vorrichtung einen Träger 2 auf, der bezüglich einer Drehachse D drehbar angeordnet ist. An einem Außenumfang dieses Trägers ist eine Vielzahl von Behandlungsstationen 8 angeordnet. Diese werden, bedingt durch die Drehung des Trägers 2, entlang eines kreisförmigen Pfades transportiert. Während dieses Transports werden unterschiedliche Behandlungsvorgänge vorgenommen, wie beispielsweise im Falle einer Blasformmaschine ein Öffnen und Schließen der jeweiligen Blasformträger mit den daran angeordneten Blasformteilen.

Das Bezugszeichen 20 kennzeichnet grob schematisch einen Reinraum bzw. Sterilraum, innerhalb dessen die Kunststoffbehältnisse transportiert werden. Dieser Reinraum wird dabei durch eine erste bewegliche Wandung 20a begrenzt sowie eine zweite stationäre Wandung 20b. Die in Fig. 1 nicht gezeigten Führungskurven können außerhalb des Reinraums angeordnet sein und es können Bewegungsübertragungsmittel vorgesehen sein, welche sich durch eine Wandung des Reinraums 20 hindurch erstrecken. Auch die Führungsrollen bewegen sich dann außerhalb des Reinraums. Aufgrund der hier beschriebenen erfindungsgemäßen Vorgehensweise, bei welcher auf Schmiermittel verzichtet werden kann, ist es jedoch bevorzugt, sowohl die Führungskurven als auch die Führungsrollen innerhalb des Reinraums anzuordnen, wodurch aufwendige Übergänge durch die Wandungen des Reinraums hindurch vermieden werden können.

Figur 2 zeigt eine detailliertere Darstellung einer erfindungsgemäßen Vorrichtung zum Umformen von Kunststoffvorformlingen zu Kunststoffbehältnissen. Diese Vorrichtung weist dabei, wie oben erwähnt, eine Behandlungsstation 8 auf. Diese Behandlungsstation weist seitliche Blasformträger 46 auf sowie ein Bodenteil 48. Zum Schließen der Blasform werden diese beiden Blasformträger zusammengeklappt und das Bodenteil 48 von unten an die Blasform herangefahren, um diese vollständig zu schließen. Anschließend werden die Kunststoffvorformlinge mit Blasdruck über eine Blasdüse 42 beaufschlagt. Das Bezugszeichen 44 kennzeichnet einen Ventilblock, der die Beaufschlagung der Kunststoffvorformlinge mit Blasluft, insbesondere unter unterschiedlichem Druckniveau, steuert.

Um hier beispielsweise die Schwenkbewegung der Blasformträger 46 zu erreichen, sind zwei Kurvenrollen 62 vorgesehen. Diese Kurvenrollen rollen dabei gegenüber zwei stationären Führungskurven 12 und 14 ab, wobei beispielsweise eine der beiden Führungskurven zum Schließen der Blasform und die andere zum Öffnen der Blasform dienen kann.

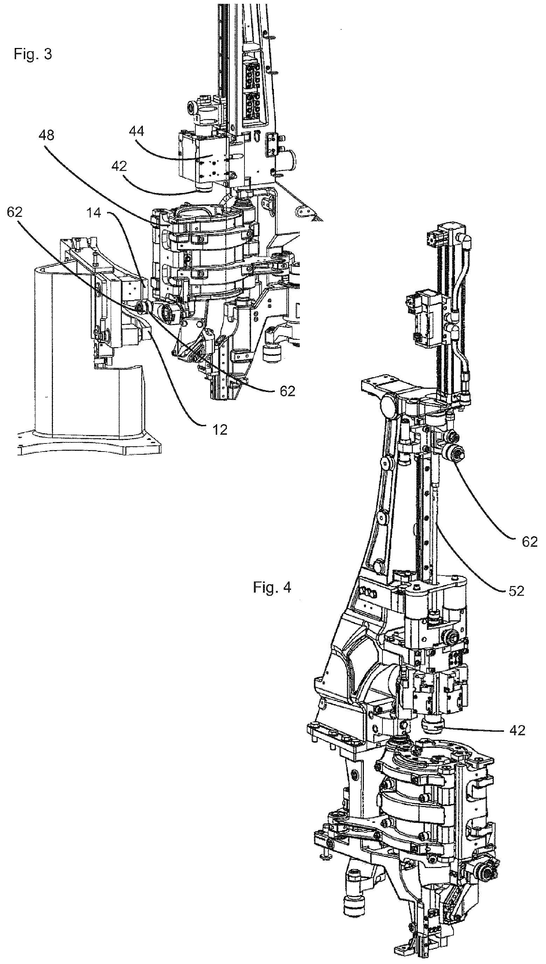

Figur 3 zeigt eine weitere Ansicht einer erfindungsgemäßen Vorrichtung. Bei dieser Ausführungsform sind ebenfalls wieder Führungsrollen 62 vorgesehen, welche sich jedoch hier in einer vertikalen Richtung bewegen können und zwar wieder, indem sie gegenüber stationär angeordneten Führungskurven 12 und 14 abrollen, welche jedoch hier nicht seitlich versetzt, sondern unterhalb und überhalb der Führungsrollen 62 sind. Durch diese Bewegung kann das Verriegelungselement, an dem die Führungsrollen 62 angeordnet sind, eine Schwenkbewegung ausführen, die ein Ver- oder Entriegeln der Blasformträger 46 erreicht. Weiterhin können an der Blasstation zusätzliche nicht gezeigte Führungsrollen 62 angebracht werden, die z.B. ein Heben oder Senken des Bodenteils der Blasform gewährleisten.

Figur 4 zeigt eine weitere Ausführungsform einer erfindungsgemäßen Vorrichtung. Hier ist ebenfalls eine Führungsrolle 62 vorgesehen, welche hier mit einer Reckstange 52 gekoppelt ist. Hier wird durch die Bewegung der Führungsrolle entlang einer definierten Kurve, insbesondere in der vertikalen Richtung, eine Reckstangenbewegung erreicht, wobei diese Reckstange insbesondere dazu dient, um den Kunststoffvorformling während seiner Expansion in seiner Längsrichtung zu dehnen.

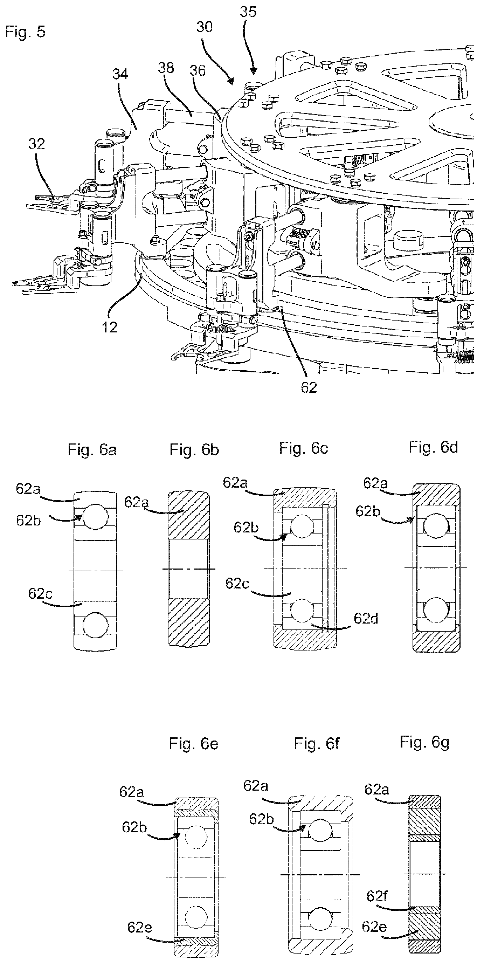

Fig. 5 zeigt eine weitere mögliche Vorrichtung 30 zum Behandeln von Behältnissen, bei der die Erfindung Anwendung finden kann. Genauer handelt es sich bei der in Fig. 5 gezeigten Ausführung um eine Transporteinrichtung 30 zum Transportieren von Behältnissen. Diese Transporteinrichtung weist dabei einen drehbaren Träger 35 auf, an dem eine Vielzahl von Halteelementen 32 zum Halten der Behältnisse angeordnet ist. Diese Halteelemente sind hier als Greifklammern ausgeführt, welche die Behältnisse unterhalb ihres Tragrings greifen können. Bei der hier gezeigten Ausführungsform können die Halteelemente auch gegenüber dem Träger 35 geschwenkt werden, so dass auch ein Teilungsverzug zwischen den einzelnen Behältnissen einstellbar ist.

Das Bezugszeichen 36 kennzeichnet ein Befestigungselement, welches bevorzugt beweglich, insbesondere schwenkbar an dem Träger 35 angeordnet ist. Auch diese Schwenkung kann mittels der oben beschriebenen Führungsrollen erreicht werden. An diesem Befestigungselement 36 ist über Verbindungskörper 38 eine Vielzahl von Trägern 34 befestigt, an denen wiederum die Halteelemente 32 angeordnet sind.

Daneben ist auch hier eine Führungskurve 12 vorgesehen, der gegenüber eine Führungsrolle 62 abrollen kann. Durch diese Abrollbewegung kann eine definierte Bewegung bzw. Schwenkung der Haltelemente gegenüber dem Träger 35 erreicht werden.

Die Fig. 6a - 6g zeigen Darstellungen von Führungsrollen. In Fig. 6a ist dabei eine an sich aus dem Stand der Technik bekannte Führungsrolle gezeigt. Diese Führungsrolle weist eine Rollenoberfläche 62a auf, die gegenüber der Führungskurve abrollt. Daneben weist diese Führungsrolle eine Lagereinrichtung 62b auf bei der es sich hier um ein Rillenkugellager handelt.

Fig. 6b zeigt eine erfindungsgemäße Ausgestaltung einer Führungsrolle. Hier ist die Führungsrolle einteilig ausgeführt und weist einen drehbaren Rollenkörper 62a auf. Fig. 6c zeigt eine weitere Ausführungsform einer Führungsrolle 62. Bei dieser Ausführungsform ist neben dem drehbaren Rollenkörper 62a und der Lagereinrichtung 62b auch ein Sicherungsring 62d vorgesehen. Das Bezugszeichen 62c bezieht sich auf einen Innenring der Lagereinrichtung.

Fig. 6d zeigt eine weitere Ausführungsform der Führungsrolle. Bei dieser Ausgestaltung handelt es sich um eine gespritzte Ausführung, bei der der Rollenkörper 6a um die Lagereinrichtung 6b gespritzt ist. Die Lagereinrichtung muss bei den gezeigten Ausführungsformen nicht aus den oben genannten Kunststoffen bestehen, da diese selbst nicht mit der Führungskurve in Berührung steht.

Allgemein wäre es jedoch denkbar, dass auch weitere Elemente der Führungsrollen, wie etwa die Lagereinrichtung, der Sicherungsring oder auch ein eventuelles Gleitlager aus einem imidiserten Kunststoff hergestellt sind. Auch hierdurch kann die Lebenserwartung einer derartigen Führungsrolle erhöht werden.

Fig. 6e zeigt eine weitere Ausführungsform einer erfindungsgemäßen Kurvenrolle. Hier handelt es sich ebenfalls um eine gespritzte Ausführungsform, bei der zusätzlich noch ein Rollenring 62e vorhanden ist. In Fig. 6f ist eine gepresste bzw. geschnappte Ausführungsform einer Führungsrolle gezeigt. Man erkennt, dass an dem Rollenkörper 62a noch ein radial nach innen ragender Abschnitt angeordnet ist, der zum Aufschnappen auf die übrigen Bereiche der Führungsrolle 62 dient.

Fig. 6g zeigt eine weitere Ausgestaltung der Führungsrolle, welche hier mit einem Gleitlager 62f und einem Rollenring 62b ausgeführt ist. Auch diese beiden Elemente müssen nicht notwendigerweise aus einem imidisierten Kunststoff hergestellt sein, der Rollenkörper 62 ist jedoch vorteilhaft aus einem solchen Kunststoff hergestellt.

Allgemein können die hier beschriebenen imidisierten Kunststoffe und insbesondere PAI - bei jeglicher Gleit.- u. Abrollanwendung zum Einsatz kommen beispielsweise auch bei einer Gleitführung in einem Linearlager bzw. Linearbuchse, wie beispielhaft in Fig. 5 gezeigt.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind.

### Bezugszeichenliste

- 1: Vorrichtung
- 2: Träger
- 8: Behandlungsstation
- 10: Kunststoffbehältnis
- 12: Führungskurve
- 14: Führungskurve
- 20: Reinraum
- 20a: bewegliche Wandung des Reinraums
- 20b: stationäre Wandung des Reinraums
- 30: Vorrichtung
- 32: Halteelement
- 34: Träger
- 35: Träger
- 36: Befestigungselement
- 38: Verbindungskörper
- 42: Blasdüse
- 44: Ventilblock
- 46: Blasformträger
- 48: Bodenteil
- 52: Reckstange
- 62: Kurvenrolle
- 62a: Rollenkörper
- 62b: Lagereinrichtung
- 62c: Innenring
- 62d: Sicherungsring
- 62e: Rollenring
- 62f: Gleitlager
- D: Drehachse

## Patentansprüche

1. Vorrichtung (1) zum Behandeln von Behältnissen (10), mit einem bewegbaren Träger (2), der bevorzugt ein um eine vorgegebene Drehachse drehbarer Träger (2) ist, an dem eine Vielzahl von Behandlungsstationen (8) zum Behandeln der Behältnisse (10) angeordnet ist, wobei jede dieser Behandlungsstationen (8) wenigstens ein bezüglich des Trägers (2) bewegbares Element (42, 44, 46) aufweist und wobei dieses bewegbare Element (42, 44, 46) wenigstens zeitweise mittels einer Kopplungseinrichtung (6) mit einer stationär angeordneten Führungskurve (12, 14) gekoppelt ist derart, dass durch eine Relativbewegung zwischen der Behandlungsstation (8) und der Führungskurve eine Bewegung des bewegbaren Elements (42, 44, 46) hervorgerufen wird, **dadurch gekennzeichnet, dass**
die Kopplungseinrichtung (6) wenigstens eine Führungsrolle (62) aufweist, die wenigstens zeitweise gegenüber der Führungskurve (12) abrollt, wobei diese Führungsrolle und/oder die Führungskurve wenigstens teilweise aus einem imidisierten Kunststoff hergestellt ist.

2. Vorrichtung (1) nach Anspruch 1,
**dadurch gekennzeichnet, dass**
die Vorrichtung einen Reinraum (20) aufweist, innerhalb dessen die Behältnisse während ihrer Behandlung durch die Behandlungsstationen (8) transportiert werden und insbesondere der Reinraum (20) einen Transportpfad der Behältnisse (10) kanalartig umgibt.

3. Vorrichtung (1) nach wenigstens einem der vorangegangenen Ansprüche,
**dadurch gekennzeichnet, dass**
der imidisierte Kunststoff aus einer Gruppe von imidisierten Kunststoffen ausgewählt ist, welche PAI (Polyamidimid), PI (Polyimid), PBI (Polybenzinimidazol), und dergleichen und/oder Kombinationen aus diesen Kunststoffen enthält.

4. Vorrichtung (1) nach wenigstens einem der vorangegangenen Ansprüche 2 - 3,
**dadurch gekennzeichnet, dass**
der Reinraum (20) wenigstens eine erste diesen Reinraum begrenzende Wandung (20a), deren Bewegung an die Bewegung des Trägers (2) gekoppelt ist sowie eine zweite stationäre, ebenfalls diesen Reinraum begrenzende Wandung (20b) aufweist.

5. Vorrichtung (1) nach wenigstens einem der vorangegangenen Ansprüche,
**dadurch gekennzeichnet, dass**
wenigstens eine die Führungskurve (12) kontaktierende Oberfläche der Führungsrolle (62) aus einem Polyamidimid hergestellt ist, wobei die Führungsrolle insbesondere mehrteilig ausgebildet ist und die Führungsrolle (62) bevorzugt mittels einer Lagereinrichtung gegenüber einem Rollenträger gelagert ist.

6. Vorrichtung (1) nach wenigstens einem der vorangegangenen Ansprüche,
**dadurch gekennzeichnet, dass**
die Führungsrolle (62) zumindest bereichsweise an der Behandlungsstation (8) angeordnet ist und insbesondere als Gleitrolle (62) ausgebildet ist.

7. Vorrichtung (1) nach wenigstens einem der vorangegangenen Ansprüche,
**dadurch gekennzeichnet, dass**
die Führungsrolle (62) einen ringförmigen Körper (64) aus Polyamidimid (PAI) aufweist, der an einer Lagereinrichtung (66) angebracht ist und der bevorzugt auf die Lagereinrichtung (66) aufgeschnappt oder aufgepresst ist.

8. Vorrichtung (1) nach wenigstens einem der vorangegangenen Ansprüche,
**dadurch gekennzeichnet, dass**
die Führungsrolle (62) die Lagereinrichtung (66) aufweist, welche mit einem Polyamidimidkörper umspritzt ist und/oder die Führungsrolle (62) einen Außendurchmesser aufweist, der zwischen 20mm und 80mm, bevorzugt zwischen 25mm und 70mm und besonders bevorzugt zwischen 30 und 65mm liegt.

9. Vorrichtung (1) nach wenigstens einem der vorangegangenen Ansprüche,
**dadurch gekennzeichnet, dass**
die Führungskurve (12) an einer der Führungsrolle (62) zugewandten Oberfläche ein nicht gehärtetes Material aufweist und sich bevorzugt die Führungsrolle (62) schmiermittellos gegenüber der Führungskurve (12) bewegt.

10. Vorrichtung (1) nach wenigstens einem der vorangegangenen Ansprüche,
**dadurch gekennzeichnet, dass**
die Kopplungseinrichtung (6) wenigstens zwei nebeneinander angeordnete Führungsrollen (62) aufweist.

11. Vorrichtung (1) nach wenigstens einem der vorangegangenen Ansprüche,
**dadurch gekennzeichnet, dass** eine Drehachse der Führungsrolle (62) parallel zu einer Drehachse des Trägers (2) oder in radialer Richtung des Trägers (2) verläuft.

12. Vorrichtung (1) nach wenigstens einem der vorangegangenen Ansprüche,
**dadurch gekennzeichnet, dass**
die Vorrichtung (1) aus einer Gruppe von Vorrichtungen (1) ausgewählt ist, welche Erwärmungseinrichtungen zum Erwärmen von Kunststoffvorformlingen, Umformungseinrichtungen zum Umformen von Kunststoffvorformlingen zu Kunststoffbehältnissen, Fülleinrichtungen zum Befüllen von Behältnissen, Verschließeinrichtungen zum Verschließen von Behältnissen mit Verschlüssen und dergleichen enthält.

13. Vorrichtung (1) nach wenigstens einem der vorangegangenen Ansprüche,
**dadurch gekennzeichnet, dass**
die Behandlungsstationen jeweils Beaufschlagungseinrichtungen aufweisen, welche Kunststoffvorformlinge mit einem gasförmigen Medium beaufschlagen, sowie bezüglich einander bewegbare Blasformteile, welche einen Hohlraum ausbilden, innerhalb dessen die Kunststoffvorformlinge durch Beaufschlagung mit dem gasförmigen Medium expandierbar sind und/oder die Behandlungsstationen jeweils einen Reckstangenkörper aufweisen, der in die Kunststoffvorformlinge zu deren Expansion einführbar ist.

14. Vorrichtung (1) nach Anspruch 1,
**dadurch gekennzeichnet, dass**
die Vorrichtung mehrere Führungskurven aufweist, um mehrere bewegbare Elemente der Vorrichtung zu bewegen, sowie auch mehrere Führungsrollen (62).

15. Vorrichtung (1) nach Anspruch 2,
**dadurch gekennzeichnet, dass**
die Führungsrolle (62) innerhalb des Reinraums (20) angeordnet ist.

## Claims

1. Apparatus (1) for treating containers (10), with a moveable carrier (2) which preferably is a carrier (2) which can be rotated about a predefined axis of rotation on which a plurality of treatment stations (8) is arranged for treating the containers (10), wherein each of these treatment stations (8) comprises at least one element (42, 44, 46) which is moveable in relation to the carrier (2), and wherein this moveable element (42, 44, 46) is coupled for at least part of the time to a stationarily arranged guide curve (12, 14) by means of a coupling device (6) such that a relative movement between the treatment station (8) and the guide curve a movement of the moveable element (42, 44, 46) is provoked, **characterised in that** the coupling device (6) comprises at least one guide roller (62) which rolls for at least part of the time with respect to the guide curve (12), wherein this guide roller and/or the guide curve is produced at least partly from an imidised plastics material.

2. Apparatus (1) according to claim 1, **characterised in that** the apparatus comprises a clean room (20), within which the containers are transported during their treatment by the treatment stations (8) and in particular the clean room (20) surrounds the transport path of the containers (10) in a channel-like manner.

3. Apparatus (1) according to at least one of the preceding claims, **characterised in that** the imidised plastics material is selected from a group of imidised plastics material which contains PAI (polyamide-imide), PI (polyimide), PBI (polybenzinimidazol) and similar, and/or combinations of these plastics materials.

4. Apparatus (1) according to at least one of the preceding claims 2 - 3, **characterised in that** the clean room (20) comprises at least one first wall (20a) delimiting this clean room, the movement of which is coupled to the movement of the carrier (2), and a second stationary wall (20b) also delimiting this clean room.

5. Apparatus (1) according to at least one of the preceding claims, **characterised in that** at least one surface of the guide roller (62) contacting the guide curve (12) is made from a polyamide-imide wherein in particular the guide roller is formed of several pieces and the guide roller (62) is mounted with respect to a roller carrier preferably by means of a bearing device.

6. Apparatus (1) according to at least one of the preceding claims, **characterised in that** the guide roller (62) is arranged at least in regions at the treatment station (8) and is in particular realized as a sliding roller (62).

7. Apparatus (1) according to at least one of the preceding claims, **characterised in that** the guide roller (62) comprises an annular body (64) of polyamide-imide (PAI) which is arranged on a bearing device (66) and which is snap-locked or pressed onto the bearing device (66) in a preferred manner.

8. Apparatus (1) according to at least one of the preceding claims, **characterised in that** the guide roller (62) comprises the bearing device (66), around which the polyamide-imide body is injection-moulded and/or the guide roller (62) comprises an outer diameter between 20 mm and 80 mm, preferably between 25 mm and 70 mm, and in particular preferably between 30 mm and 65 mm.

9. Apparatus (1) according to at least one of the preceding claims, **characterised in that** the guide curve (12) comprises a non-hardened material on a surface facing the guide roller (62) and the guide roller (62) moves with respect to the guide curve (12) without lubrication.

10. Apparatus (1) according to at least one of the preceding claims, **characterised in that** coupling device (6) comprises at least two guide rollers (62) arranged next to each other.

11. Apparatus (1) according to at least one of the preceding claims, **characterised in that** a rotary axis of the guide roller (62) runs parallel to a rotary axis of the carrier (2) or runs in a radial direction of the carrier (2).

12. Apparatus (1) according to at least one of the preceding claims, **characterised in that** the apparatus (1) is selected from a group of apparatuses (1) which contain heating devices for heating plastics material preforms, transformation devices for transforming plastics material preforms into plastics material containers, filling devices for filling containers, closing devices for closing containers with closures, and the like.

13. Apparatus (1) according to at least one of the preceding claims, **characterised in that** the treatment stations each comprise actuation devices which actuate upon plastics material preforms with a gaseous medium, and blow moulding parts which are moveable in relation to each other which form a cavity, within which the plastics material preforms can be expanded by actuation with the gaseous medium and/or the treatment stations each have a stretch rod body which can be introduced into the plastics material preforms for their expansion.

14. Apparatus (1) according to claim 1, **characterised in that** the apparatus comprises several guide curves in order to move several moveable elements of the apparatus, and also several guide rollers (62).

15. Apparatus (1) according to claim 2, **characterised in that** the guide roller (62) is arranged inside the clean room (20).

## Revendications

1. Installation (1) pour le traitement de récipients (10), avec un support mobile (2), lequel est préférentiellement un support (2) rotatif autour d'un axe de rotation prédéfini, contre lequel est disposée une pluralité de postes de traitement (8) pour le traitement des récipients (10), chacun desdits postes de traitement (8) comportant au moins un élément (42, 44, 46) mobile par rapport au support (2) et ledit élément mobile (42, 44, 46) étant accouplé au moins temporairement à une came de guidage (12, 14) fixe au moyen d'un dispositif d'accouplement (6), de manière à entraîner un déplacement de l'élément mobile (42, 44, 46) par déplacement relatif entre le poste de traitement (8) et la came de guidage,
**caractérisée en ce que**
le dispositif d'accouplement (6) comporte au moins un galet de guidage (62) roulant au moins temporairement par rapport à la came de guidage (12), ledit galet de guidage et/ou la came de guidage étant fabriqués au moins en partie en matière plastique imidisée.

2. Installation (1) selon la revendication 1,
**caractérisée en ce que**
ladite installation comporte un espace stérile (20) à l'intérieur duquel les récipients sont transportés par les postes de traitement (8) pendant leur traitement et **en ce qu'**en particulier l'espace stérile (20) entoure un chemin de transport des récipients (10) à la manière d'un canal.

3. Installation (1) selon au moins une des revendications précédentes,
**caractérisée en ce que**
la matière plastique imidisée est sélectionnée dans un groupe de matières plastiques imidisées comprenant PAI (polyamide imide), PI (polyimide), PBI (polybenzinimidazole) et similaires, et/ou des combinaisons desdites matières plastiques.

4. Installation (1) selon au moins une des revendications précédentes 2 à 3,
**caractérisée en ce que**
l'espace stérile (20) présente au moins une première paroi (20a) délimitant ledit espace stérile, dont le déplacement est couplé au déplacement du support (2), et une deuxième paroi (20b) fixe, délimitant également ledit espace stérile.

5. Installation (1) selon au moins une des revendications précédentes,
**caractérisée en ce qu'**
au moins une surface du galet de guidage (62) en contact avec la came de guidage (12) est fabriquée en polyamide imide, le galet de guidage étant en particulier réalisé en plusieurs parties et le galet de guidage (62) étant préférentiellement monté au moyen d'un dispositif de palier par rapport à un porte-galet.

6. Installation (1) selon au moins une des revendications précédentes,
**caractérisée en ce que**
le galet de guidage (62) est disposé au moins en régions sur le poste de traitement (8) et est en particulier réalisé sous forme de roulette (62).

7. Installation (1) selon au moins une des revendications précédentes,
**caractérisée en ce que**
le galet de guidage (62) présente un corps annulaire (64) en polyamide imide (PAI) monté contre un dispositif de palier (66) et préférentiellement enclenché ou emmanché sur le dispositif de palier (66).

8. Installation (1) selon au moins une des revendications précédentes,
**caractérisée en ce que**
le galet de guidage (62) comporte le dispositif de palier (66) enrobé d'un corps en polyamide imide et/ou **en ce que** le galet de guidage (62) présente un diamètre extérieur compris entre 20mm et 80mm, préférentiellement entre 25mm et 70mm et particulièrement préférentiellement entre 30 et 65mm.

9. Installation (1) selon au moins une des revendications précédentes,
**caractérisée en ce que**
la came de guidage (12) présente un matériau non durci sur une surface opposée au galet de guidage (62) et **en ce que** le galet de guidage (62) se déplace préférentiellement sans lubrifiant par rapport à la came de guidage (12).

10. Installation (1) selon au moins une des revendications précédentes,
**caractérisée en ce que**
le dispositif d'accouplement (6) comprend au moins deux galets de guidage (62) disposés côte à côte.

11. Installation (1) selon au moins une des revendications précédentes,
**caractérisée en ce qu'**
un axe de rotation du galet de guidage (62) est parallèle à un axe de rotation du support (2) ou s'étend dans le sens radial du support (2).

12. Installation (1) selon au moins une des revendications précédentes,
**caractérisée en ce que**
ladite installation (1) est sélectionnée dans un groupe d'installations (1) comprenant des dispositifs de chauffage pour le chauffage de préformes en matière plastique, des dispositifs de transformation pour la transformation de préformes en matière plastique en récipients en matière plastique, des dispositifs de remplissage pour le remplissage de récipients, des dispositifs d'obturation pour l'obturation de récipients avec des bouchons et similaires.

13. Installation (1) selon au moins une des revendications précédentes,
**caractérisée en ce que**
les postes de traitement comportent des dispositifs d'application respectifs qui soumettent les préformes en matière plastique à un fluide gazeux, et des parties de moule de soufflage déplaçables l'une par rapport à l'autre, formant une cavité à l'intérieur de laquelle les préformes en matière plastique peuvent être expansées par application du fluide gazeux et/ou **en ce que** les postes de traitement comportent chacun un corps à barre d'étirage insérable dans les préformes en matière plastique pour expanser celles-ci.

14. Installation (1) selon la revendication 1,
**caractérisée en ce que**
ladite installation comporte plusieurs cames de guidage pour déplacer plusieurs éléments mobiles de l'installation, et aussi plusieurs galets de guidage (62).

15. Installation (1) selon la revendication 2,
**caractérisée en ce que**
le galet de guidage (62) est disposé à l'intérieur de l'espace stérile (20).
